Europäisches Patentamt

European Patent Office

Office européen des brevets

(11) Publication number: **0 661 365 A2**

# EUROPEAN PATENT APPLICATION

(21) Application number: **95101017.2**

(22) Date of filing: **16.07.92**

(51) Int. Cl.6: **C09K 5/04**, C09K 3/30, C23G 5/02, C08J 9/14, C11D 7/50

This application was filed on 26 - 01 - 1995 as a divisional application to the application mentioned under INID code 60.

(30) Priority: **22.07.91 US 733871**

(43) Date of publication of application: **05.07.95 Bulletin 95/27**

(60) Publication number of the earlier application in accordance with Art.76 EPC: **0 595 937**

(84) Designated Contracting States: **DE ES FR GB IT NL**

(71) Applicant: **E.I. DU PONT DE NEMOURS AND COMPANY**
**1007 Market Street**
**Wilmington**
**Delaware 19898 (US)**

(72) Inventor: **Shiflett, Mark Brandon**
**609 5th Street**
**Newark,**
**Delaware 19898 (US)**

(74) Representative: **BROOKES & MARTIN**
**High Holborn House**
**52/54 High Holborn**
**London, WC1V 6SE (GB)**

(54) Uses of 1,2,2,3,3-pentafluoropropane.

(57) 1,2,2,3,3-Pentafluoropropane is used as a refrigerant, a cleaning agent, an aerosol propellant, a heat transfer media, a gaseous dielectric, a fire extinguishing agent, an expansion agent for polymers such as polyolefins and polyurethanes, and as a power cycle working fluid.

FIELD OF INVENTION

This invention relates to the use of 1,2,2,3,3-pentafluoropropane (HFC-245ca) as a refrigerant, an aerosol propellant, a cleaning agent, a heat transfer media, a gaseous dielectric, a fire extinguishing agent, an expansion agent for polymers such as polyolefins and polyurethanes, and as a power cycle working fluid. More particularly, it relates to the use of 1,2,2,3,3-pentafluoropropane as a highly effective and potentially environmentally safe refrigerant in refrigeration equipment that uses centrifugal compression.

BACKGROUND OF THE INVENTION

Mechanical refrigeration is primarily an application of thermodynamics wherein a cooling medium, such as a refrigerant, goes through a cycle so that it can be recovered for reuse. Commonly used cycles include vapor-compression, absorption, steam-jet or steam-ejector, and air.

The equipment used in a vapor-compression cycle includes an evaporator, a compressor, a condenser, a liquid storage receiver and an expansion valve. Liquid refrigerant enters the evaporator through an expansion valve, and the liquid refrigerant boils in the evaporator at a low temperature to form a gas to produce cooling. The low pressure gas enters a compressor where the gas is compressed to raise its pressure and temperature. The high pressure gaseous refrigerant then enters the condenser in which the refrigerant condenses and discharges its heat to the environment. A receiver collects the condensed high pressure liquid refrigerant, and the refrigerant goes to the expansion valve through which the liquid expands from the high pressure level in the condenser to the low pressure level in the evaporator.

There are various types of compressors that may be used in refrigeration applications. Compressors can be generally classified as reciprocating, rotary, jet, centrifugal, or axial-flow, depending on the mechanical means to compress the fluid, or as positive-displacement or dynamic, depending on how the mechanical elements act on the fluid to be compressed.

A centrifugal compressor uses rotating elements to accelerate the refrigerant radially, and typically includes an impeller and diffuser housed in a casing. Centrifugal compressors usually take fluid in at an impeller eye, or central inlet of a circulating impeller, and accelerate it radially outwardly. Some static pressure rise occurs in the impeller, but most of the pressure rise occurs in the diffuser section of the casing, where velocity is converted to static pressure. Each impeller-diffuser set is a stage of the compressor. Centrifugal compressors are built with from 1 to 12 or more stages, depending on the final pressure desired and the volume of refrigerant to be handled.

The pressure ratio, or compression ratio, of a compressor is the ratio of absolute discharge pressure to the absolute inlet pressure. Pressure delivered by a centrifugal compressor is practically constant over a relatively wide range of capacities.

Multistage centrifugal compressors can handle 500 to more than 150,000 cfm of refrigerant (14 to 4300 $m^3$/m) at pressures as high as 5000 psi (35 MPa), but are limited to compression ratios in the order of 10.

Positive displacement compressors draw vapor into a chamber, and the chamber decreases in volume to compress the vapor. After being compressed, the vapor is forced from the chamber by further decreasing the volume of the chamber to zero or nearly zero. A positive displacement compressor can build up a pressure which is limited only by the volumetric efficiency and the strength of the parts to withstand the pressure.

Unlike a positive displacement compressor, a centrifugal compressor depends entirely on the centrifugal force of the high speed impeller to compress the vapor passing through the impeller. There is no positive displacement, but rather what is called dynamic-compression.

The pressure a centrifugal compressor can develop depends on the tip speed of the impeller. Tip speed is the speed of the impeller measured at its tip and is related to the diameter of the impeller and its revolutions per minute. The capacity of the centrifugal compressor is determined by the size of the passages through the impeller. This makes the size of the compressor more dependent on the pressure required than the capacity.

Because of its high speed operation, a centrifugal compressor is fundamentally a high volume, low pressure machine. A centrifugal compressor works best with a low pressure refrigerant, such as trichlorofluoromethane (CFC-11). When CFC-11 is used as the refrigerant, suction pressure in the compressor is from about 18 to 25 inches of vacuum depending on the evaporator temperature required, and the discharge pressure is near atmospheric pressure. A single stage impeller can be used with CFC-11 for air conditioning suction temperatures.

A two-stage impeller is common for many conditions. In operation, the discharge of the first stage impeller goes to the suction intake of a second impeller. Each stage can build up a compression ratio of about 4 to 1, that is, the absolute discharge pressure can be 4 times the absolute suction pressure.

Centrifugal compressors range in size from 200 to 10,000 kilowatts of refrigeration capacity. For applications requiring more or less refrigeration capacity than CFC-11, 1,2,2-trichloro-trifluoroethane (CFC-113) or 1,2-dichloro-tetrafluoroethane (CFC-114) can be used as the refrigerant in place of CFC-11 without changing the compressor except for providing a properly-sized motor.

A proposed world-wide reduction in the production of fully halogenated chlorofluorocarbons such as CFC-11, CFC-113, and CFC-114, has developed an urgent need for alternative, more environmentally acceptable products.

Large investments have been made in centrifugal compressors that were designed for CFC-11, CFC-113, or CFC-114. A centrifugal compressor is designed for the refrigerant with which it is to be used. That is, a centrifugal compressor is typically designed by first selecting a refrigerant, and then determining the desired refrigeration capacity and power source. Once these variables are known, the diameter of the impeller, the size of the impeller opening, and the number of stages are designed to achieve the desired refrigeration capacity.

A problem with replacing chlorofluorocarbons with alternative refrigerants for use in existing centrifugal compressors is that unless the alternative refrigerant matches certain physical criteria, the alternative refrigerant will not work in the existing centrifugal compressor. Important criteria include the "tip speed" of a refrigerant, meaning the speed of the impeller as measured at its tip for a given centrifugal compressor, and the density and molecular weight of the refrigerant.

If it is desired to replace a refrigerant in a centrifugal compressor, and the replacement refrigerant does not perform as well as the original refrigerant, it is possible to design a compressor for the replacement refrigerant and to replace the original compressor. However, replacing an existing compressor is not possible in all cases. For example, a centrifugal compressor may be so large (such as is used in the cooling systems of large buildings) that it cannot be replaced by a redesigned compressor. In such cases, the replacement refrigerant must work in the original compressor.

## SUMMARY OF THE INVENTION

Accordingly, it is an object of this invention to provide a refrigerant that may be used in centrifugal compressors designed for the refrigerants trichlorofluoromethane (CFC-11), 1,1,2-trichloro-trifluoroethane (CFC-113) or 1,2-dichloro-tetrafluoroethane (CFC-114) that performs similarly to CFC-11, CFC-113 or CFC-114.

It is another object of this invention to provide a refrigerant that has a lower ozone depletion potential than CFC-11, CFC-113 or CFC-114.

These and other objects are achieved by the discovery that 1,2,2,3,3 pentafluoropropane (HFC-245ca) can be used as a refrigerant in centrifugal compression refrigeration equipment designed for CFC-11, CFC-113, or CFC-114 while achieving operating performances comparable to CFC-11, CFC-113 or CFC-114.

The present invention also relates to the discovery that HFC-245ca may be used as an aerosol propellant, a cleaning agent, a heat transfer media, a gaseous dielectric, a fire extinguishing agent, an expansion agent for polymers such as polyolefins and polyurethanes, or as a power cycle working fluid.

## DETAILED DESCRIPTION

The present invention relates to the use of 1,1,2,2,3-pentafluoropropane (HFC-245ca) as a refrigerant for use in centrifugal compression refrigeration equipment.

As early as the 1970's with the initial emergence of a theory that the ozone was being depleted by chlorine atoms introduced to the atmosphere from the release of fully halogenated chlorofluorocarbons, it was known that the introduction of hydrogen into previously fully halogenated chlorofluorocarbons markedly reduced the chemical stability of these compounds. Hence, these now destabilized compounds would be expected to degrade in the atmosphere and not reach the stratosphere and the ozone layer.

The accompanying Table 1 lists the ozone depletion potential of some fully and partially halogenated halocarbons. Halocarbon Global Warming Potential data (potential for reflecting infrared radiation (heat) back to earth and thereby raising the earth's surface temperature) are also shown.

Ozone Depletion Potential (ODP) is based on the ratio of the calculated ozone depletion in the stratosphere resulting from the emission of a compound compared to the ozone depletion potential resulting from the same rate of emission of CFC-11, which is set at 1.0. HFC-245ca ($CF_2HCF_2CFH_2$) does not contain any chlorine therefore it has an Ozone Depletion Potential (ODP) of 0 as compared with CFC-11.

TABLE 1

| OZONE DEPLETION AND GREENHOUSE POTENTIALS | | |
|---|---|---|
| Refrigerant | Ozone Depletion Potential | Halocarbon Global Warming Potential |
| CFC-11 ($CFCl_3$) | 1.0 | 1.0 |
| CFC-113 ($CCl_2FCClF_2$) | 0.8 | 1.4 |
| CFC-114 ($CClF_2CClF_2$) | 0.7 | 3.9 |
| HCFC-245ca ($CFH_2CF_2CHF_2$) | 0.0 | * |
| *Due to the number of hydrogen atoms present in the HFC-245ca molecule, the global warming potential should be negligible when compared with a fully halogenated CFC refrigerants such as CFC-11, CFC-113 or CFC-114. | | |

It should be noted that 1,1,2,2,3-pentafluoropropane is the same isomer as 1,2,2,3,3-pentafluoropropane. Although 1,2,2,3,3-pentafluoropropane has zero ODP and an expected minimal global warming potential, it is an extremely effective refrigerant and performs similarly to chlorofluorocarbon refrigerants.

There are three important choices in selecting or designing a centrifugal compressor: the diameter of the impeller, which means the length from the end of one of the impeller blades to the end of an opposite blade, the width of the passage in the impeller, and the refrigerant. The impeller and refrigerant must be selected in a combination that best suits a desired application.

The diameter of the impeller depends on the discharge pressure that must be achieved. For a given rotative speed, a large impeller diameter provides a higher tip speed, which results in a higher pressure ratio. Tip speed means the tangential velocity of the refrigerant leaving the impeller.

If a centrifugal compressor is driven by an electric motor operating at 60 radians per second (r/s), the impeller diameter needed for the 113.1 m/s tip speed of CFC-11 is 0.6 meters.

It is desirable to find a "drop-in" replacement for CFC-11, that is, a refrigerant that may be used in equipment designed for CFC-11 and that performs similarly to CFC-11. To perform as well as CFC-11 in existing equipment, a refrigerant must be such that when it is used, the impeller achieves a tip speed that matches, or nearly matches, the tip speed of the impeller when CFC-11 is used. HFC-245ca provides a tip speed identical or nearly identical to the tip speed of CFC-11 when the two refrigerants are used in the same operating equipment. Another important factor in the design of a centrifugal compressor is the width of passage in the impeller. Increasing the size of this passage increases the capacity of the compressor, but also increases the power required by the compressor. Centrifugal compressors are designed to maintain high efficiencies, especially when the compressors are used with machines that operate at low capacities. One way to increase the efficiency of the compressor without increasing the width between the impeller blades is to use a refrigerant with a low density, such as CFC-11 or CFC-113, which reduces the friction on the narrow impeller faces relative to the flowrate through the impeller.

The liquid density of CFC-11 is 1.487 g/cc at room temperature, and the liquid density of 1,2,2,3,3-pentafluoropropane is 1.377 g/cc at room temperature. The lower density of HFC-245ca may increase the efficiency of a centrifugal compressor at low capacities, and at least should allow the centrifugal compressor to operate at the same efficiency as when CFC-11 is used.

Finally, the molecular weight of the refrigerant is an important design consideration for centrifugal compressors. The molecular weight of CFC-11 is 137.4 and the molecular weight of 1,2,2,3,3-pentafluoropropane is essentially identical, 134.0.

HFC-245ca was considered a flammable refrigerant based on the number of hydrogen atoms present in the molecule. Recently flammability measurements were performed according to the ASTM E-681-85 technique and found HFC-245ca to be nonflammable in air at room temperature and pressure. However, it may be possible that HFC-245ca may become combustible if under pressure in the presence of air and an ignition source.

EXAMPLE 1

Tip Speed to Develop Pressure

Tip speed can be estimated by making some fundamental relationships for refrigeration equipment that uses centrifugal compressors. The torque a impeller ideally imparts to a gas is defined as

$$T = m^*(v_2{}^*r_2 - v_1{}^*r_1) \qquad \text{Equation 1}$$

where

$T =$ torque, N*m

$m =$ mass rate of flow, kg/s

$v_2 =$ tangential velocity of refrigerant leaving impeller, m/s

$r_2 =$ radius of exit impeller, m

$v_1 =$ tangential velocity of refrigerant entering impeller, m/s

$r_1 =$ radius of inlet of impeller, m

Assuming the refrigerant enters the impeller in an essentially radial direction, the tangential component of the velocity v1 = 0, therefore

$$T = m^*v_2{}^*r_2 \qquad \text{Equation 2}$$

The power required at the shaft is the product of the torque and the rotative speed

$$P = T^*\omega \qquad \text{Equation 3}$$

where

$P =$ power, W

$\omega =$ rotative speed, rad/s

therefore,

$$P = T^*\omega = m^*v_2{}^*r_2{}^*\omega \qquad \text{Equation 4}$$

At low refrigerant flow rates, the tip speed of the impeller and the tangential velocity of the refrigerant are nearly identical; therefore

$$r_2{}^*\omega = v_2 \qquad \text{Equation 5}$$

and

$$P = m^*v_2{}^*v_2 \qquad \text{Equation 6}$$

Another expression for ideal power is the product of the mass rate of flow and the isentropic work of compression,

$$P = m^*H_i{}^*(1000J/kJ) \qquad \text{Equation 7}$$

where

$H_i =$ Difference in enthalpy of the refrigerant from a saturated vapor at the evaporating conditions to saturated condensing conditions, kJ/kg. Combining the two expressions Equation 6 and 7 produces,

$$v_2{}^*v_2 = 1000^*H_i \qquad \text{Equation 8}$$

Although equation 8 is based on some fundamental assumptions, it provides a good estimate of the tip speed of the impeller and provides an important way to compare tip speeds of refrigerants.

Table 1 shows theoretical tip speeds that are calculated for trichlorofluoromethane (CFC-11), 1,2,2,3,3-pentafluoropropane (HFC-245ca), and ammonia. The conditions assumed for this comparison are that the refrigerant is compressed from a saturated vapor at 10 deg Celsius (50 degrees Fahrenheit) to a pressure corresponding to a condensing temperature of 30 degrees Celsius (86 degrees Fahrenheit). These are typical conditions under which centrifugal chillers perform.

5

Table 2

|  | CFC-11 | HFC-245ca | Ammonia |
|---|---|---|---|
| $H_i$, kJ/kg | 12.8 | 13.5 | 88.0 |
| $v_2$, m/s | 113.1 | 116.2 | 297.0 |

Example 1 shows that if HFC-245ca is substituted for CFC-11 in a centrifugal compressor operating at the same speed as when CFC-11 is used (60 r/s), the impeller diameter needed to achieve a tip speed of 116.2 m/s is 0.62 meters. Because the impeller diameters necessary when CFC-11 or HFC-245ca are used in the compressor are so similar (0.6 m v. 0.62 m), little or no modification to the impeller would be needed if HFC-245ca is substituted for CFC-11.

If another refrigerant such as ammonia were used in the equipment designed for CFC-11, the equipment would require an impeller diameter of 1.58 meters. Therefore, ammonia could not be used in equipment designed for CFC-11 because the impeller diameter of that equipment would need to be increased to 1.58 meters for the equipment to perform as well with ammonia as it performs with CFC-11. An impeller of 1.58 meters is impractical because it would require a compressor that is 2.6 times larger than a compressor that uses CFC-11 and because the strength of the material used in typical impellers limits the speed of the impeller to 300 m/s. The tip speed of 297 m/s that would be necessary if ammonia were used is very close to the strength limitations of conventional impellers.

If ammonia were used in equipment designed for use with CFC-11, that equipment would not achieve a tip speed high enough for the compressor to achieve a pressure necessary for condensation to take place.

## EXAMPLE 2

Standard Test Method for Concentration Limits of Flammability of Chemicals ASTM E-681-85

This test method covers the determination of the lower and upper concentration limits of flammability of chemicals having sufficient vapor pressure to form flammable mixtures in air at one atmosphere at a test temperature. This method may be used to determine these limits in the presence of inert dilution gases. No oxidant stronger than air should be used.

A uniform mixture of a gas or vapor with air is ignited in a closed 5 liter glass vessel and the upward and outward propagation of the flame away from the ignition source (a spark source and match head) is noted by visual observation. The concentration of the flammable component is varied between trials until the composition which just sustains propagation of the flame is determined.

Various concentrations of HFC-245ca were mixed with air and none were found to have a propagating flame that either was sustained or reached the walls of the 5 liter flask.

Table 2

| Test no. | Flask Temp (deg C) | Vol % HFC-245ca | Propagating Flame |
|---|---|---|---|
| 1 | 23 | 10.0 | No |
| 2 | 23 | 12.5 | No |
| 3 | 23 | 7.5 | No |
| 4 | 23 | 5.0 | No |
| 5 | 23 | 11.0 | No |
| 6 | 23 | 9.0 | No |

The largest visual flame seen was during Test 1 which had a flame approximately 1 inch wide and 5 inches long that became very short and was not sustained. Additional tests 2, 5, and 6 were run to ensure this flame was not longer or sustained. Tests 2, 5, and 6 found smaller flames, that is flames 1/2 inch wide and 1 to 2 inches high that did not last as long as test 1. Tests 3 and 4 were run to ensure that the lower flammability limit was not missed. The conclusion from these tests was that 1,2,2,3,3-pentafluoropropane is nonflammable at atmospheric pressure and temperature according to the ASTM E-681-85.

HFC-245ca could be used as a new cleaning agent, aerosol propellant, heat transfer media, gaseous dielectric, fire extinguishing agent, expansion agent for polymers such as polyolefins and polyurethanes, and power cycle working fluids.

A process for cleaning a solid surface includes treating said surface with HFC-245ca.

A process for preparing a polymer foam from a polymer foam formulation includes utilizing an effective amount of 1,2,2,3,3-pentafluoropropane.

A process for preparing aerosol formulations includes combining active ingredients in an aerosol container with an effective amount of 1,2,2,3,3-pentafluoropropane.

A process for atomizing a fluid includes a step of using 1,2,2,3,3-pentafluoropropane as an aerosol propellant.

A process for electrically insulating includes a step of using 1,2,2,3,3-pentafluoropropane as a gaseous dielectric.

A process for suppressing a fire includes a step of using 1,2,2,3,3-pentafluoropropane as a fire extinguishing agent.

A process for delivering power includes a step of using 1,2,2,3,3-pentafluoropropane as a power cycle working fluid.

## Claims

1. A process for preparing a polymer foam from a polymer foam formulation utilizing an effective amount of 1,2,2,3,3,-pentafluoropropane.

2. A process for preparing aerosol formulations wherein active ingredients are combined in an aerosol container with an effective amount of 1,2,2,3,3-pentafluoropropane.

3. A process for atomizing a fluid comprising a step of using 1,2,2,3,3-pentafluoropropane as an aerosol propellant.

4. A process for electrically insulating comprising a step of using 1,2,2,3,3-pentafluoropropane as a gaseous dielectric.

5. A process for suppressing a fire comprising a step of using 1,2,2,3,3-pentafluoropropane as a fire extinguishing agent.

6. A process for delivering power comprising a step of using 1,2,2,3,3-pentafluoropropane as a power cycle working fluid.

7. A process for cleaning a solid surface comprising treating said surface with 1,2,2,3,3-pentafluoropropane.